# EUROPEAN PATENT APPLICATION

(11) **EP 4 624 753 A1**
(43) Date of publication of application: **01.10.2025**
(21) Application number: 24305472.3
(22) Date of filing: 28.03.2024
(51) Int. Cl.: F04D 13/06, F04D 29/42, F04D 29/62, H02K 5/22

(54) **CIRCULATION PUMP COMPRISING A PUMP HOUSING, A MOTOR HOUSING AND A TERMINAL BOX**

(71) Applicant: WILO SE, 44263 Dortmund (DE)
(72) Inventor: BOUET, Jérôme, 44263 Dortmund (DE); VALERIANI, Guillaume, 44263 Dortmund (DE)
(74) Representative: Schwöbel, Thilo K.

(57) **Abstract**

The invention relates to a circulation pump (1) comprising
-- a pump housing (10) with an impeller therein, the impeller being rotatable around a rotation axis (R) of the pump (1),
-- a motor housing (20) with an electrical motor therein, the electrical motor being coaxially connected to and driving the impeller,
-- a terminal box (30)
with electrical and/or electronical components therein for controlling the electrical motor, and
with a connecting element (321) to establish an electrical connection of the terminal box (30),

the electrical motor being arranged between the pump housing (10) and the terminal box (30).

## Description

The present invention relates to a circulation pump comprising a pump housing, a motor housing and a terminal box.

### BACKGROUND OF THE INVENTION

There are many developments in the field of pumping, especially relating to pumping fluids like water and/or circulation pumps, and especially regarding the interworking of electrical engineering, mechanical engineering, and telecommunications, especially in view of more sustainability, ease of installation and/or reduction of maintenance efforts.

Circulation pumps are well known and are nowadays used, for instance, in heating systems of industrial applications as well as private households. For proper functionality, circulation pumps require one or many connecting elements, particularly for power supply and/or signal transmission.

Connecting elements are typically located outside the terminal box. The terminal box comprises electrical and/or electronical components for controlling an electrical motor that drives an impeller within the pump housing. The terminal box further comprises the connecting element to establish an electrical connection of the terminal box.

The position and orientation of such connecting elements can significantly impact the overall size of a circulation pump, especially when a counterpart of the connecting element is connected to the connecting element. In the state of the art, there are two primary methods or solutions for ensuring power supply to the circulation pump and/or signal exchange between the circulation pump and other devices. According to a first solution, the connecting elements are formed on the outside of the terminal box, providing rear or front access. This solution, while being highly functional and offering great accessibility, can increase the external size of the terminal box, especially when the counterpart of the respective connecting element is connected to the circulation pump. A second solution requires connecting the counterpart to the connecting element from a lateral side or surface of the circulation pump. The second solution allows for a smaller overall or external size of the pump when the one or many counterparts are plugged in or connected to the pump. However, the second solution also has its drawbacks, as it can increase the risk of moving the counterpart during operation of the pump. Furthermore, disconnecting the counterpart from the connecting element may be relatively difficult in the second solution, for instance due to spatial challenges, e.g. in basements of private households.

### SUMMARY OF THE INVENTION

An object of the present invention is to provide a technically simple, effective and cost-effective solution for providing a circulation pump with a more compact overall size.

The object of the present invention is achieved by a circulation pump comprising
-- a pump housing with an impeller therein, the impeller being rotatable around a rotation axis of the pump,
-- a motor housing with an electrical motor therein, the electrical motor being coaxially connected to and driving the impeller,
-- a terminal box
   with electrical and/or electronical components therein for controlling the electrical motor, and
   with a connecting element to establish an electrical connection of the terminal box,
the electrical motor being arranged between the pump housing and the terminal box, wherein the connecting element is formed such as to define a connecting direction or axis perpendicular to the rotation axis and such that, in order to establish the electrical connection, a counterpart of the connecting element is required to be moved along the connecting direction or axis.

It is thereby advantageously possible according to the present invention to provide an optimized overall size of the circulation pump, particularly when the counterpart is plugged in or connected to the connecting element. In other words, maximum external dimensions of the circulation pump - and, hence, corresponding space requirements - are advantageously reduced. Said advantage is achieved particularly due to the fact that the connecting element does not need to be formed on a back or rear surface of the pump, which reduces the maximum length of the pump, the length of the pump being configured parallel to the rotation axis of the pump. A circulation pump according to the invention further reduces the risk of moving the counterpart during operation, while ensuring that the counterpart can still be securely and easily connected to and/or disconnected from the pump.

The connecting direction or axis can particularly be a radial direction of the circulation pump. The radial direction of the pump can be particularly defined as a direction perpendicular to the rotation axis. Furthermore, the terminal box can comprise one or many recesses and/or concavities. Preferably, the terminal box comprises two connecting elements, for instance one connecting element for power supply and a further connecting element for signal exchange. The one or the two connecting elements (or even more than two connecting elements) can be respectively formed inside a recess or concavity of the terminal box which can be advantageous as the overall size or volume of the pump thereby can be reduced. Moreover, configuring a connecting element inside a recess can simplify the plugging in and unplugging of a counterpart since one or many internal surface sections of the recess can serve as guiding means for the counterpart. At the same time, due to a voluminous section of the counterpart being arranged inside the recess, the counterpart can be more securely remain plugged in. In other words, a recess can increase mechanical stability of the counterpart and/or of the connection, at least in a plugged in or connected state. The electrical connection within the meaning of the invention also includes an optical connection. In other words, the connection between the connecting element and the counterpart can be optical as well.

According to a preferred embodiment of the invention, the connecting direction or axis and the rotation axis are skew and/or do not comprise an intersection point. The terminal box can comprise a main section and a protruding section. The main section can be, at least substantially, formed around the rotation axis. The main section further can comprise a circumferential direction, a main body of the main section being configured especially symmetrically along the circumferential direction. The protruding section on the other hand can extend - especially perpendicularly and - away from the rotation axis. Furthermore, the protruding section can be formed in a first position that is arranged parallel to an outflow pipe of the circulation pump. The protruding section can also be formed in a second, third or fourth position. In the second position, the protruding section can be spaced apart by 90 degrees along the circumferential direction with respect to the first position. In the third position, the protruding section can be spaced apart by 180 degrees along the circumferential direction with respect to the first position. And in the fourth position, the protruding section can be spaced apart by 270 degrees along the circumferential direction with respect to the first position. In other words, the connecting direction or axis can be configured in two different directions, the two different directions being arranged perpendicularly to each other.

In an advantageous embodiment of the invention, the circulation pump comprises an inflow pipe and an outflow pipe,
wherein the inflow pipe defines an inflow direction,
wherein the outflow pipe defines an outflow direction,
wherein the inflow direction and the outflow direction are formed at least partially perpendicularly to the rotation axis, wherein the connecting element of the terminal box is especially formed near the outflow pipe of the pump. Preferably, the inflow pipe and the outflow pipe are arranged, at least partially, parallel to each other. Furthermore, preferably, the inflow pipe and the outflow pipe are arranged, at least partially, colinearly. In other words, the inflow direction can be identical with the outflow direction. However, it is also conceivable that an angle is formed between the inflow direction and the outflow direction. Inflow direction and outflow direction within the meaning of the application is particularly a respective direction of a pumped medium at an inlet and an outlet of the circulation pump. For instance, the inflow pipe can comprise an inflow flange, the inflow direction being defined as the direction of the sucked and/or pumped medium at a position of the inflow flange. Analogously, the outflow pipe can comprise an outflow flange, the outflow direction being defined as the direction of the sucked and/or pumped medium at a position of the outflow flange.

According to another embodiment of the present invention, the terminal box comprises a front surface that is formed perpendicularly to the rotation axis, the front surface facing away from the motor housing, wherein the terminal box further comprises a first lateral surface that is formed perpendicularly to the front surface, wherein the connecting element is formed in or on the first lateral surface. The terminal box can have a first and a second lateral surface, the two lateral surfaces being parallel to each other. Furthermore, in the first lateral surface a first connecting element can be configured or formed. The first connecting element can provide power/electricity to the pump. Additionally, the first connecting element can also enable signal transmission/exchange and processing, for instance pulse-width modulation.

An advantageous embodiment of the present invention comprises a further connecting element that is formed such as to define a further connecting direction or axis perpendicular to the rotation axis and such that, in order to establish a further electrical connection, a further counterpart is required to be moved along the further connecting direction or axis, wherein the further connecting direction or axis is preferably arranged coaxially with the connecting direction or axis. The connecting element and the further connecting element can be both configured in the protruding section of the terminal box. The connecting element and the further connecting element can be both configured in or on the first lateral surface. Alternatively, the first connecting element can be formed in or on the first lateral surface and the further connecting element can be formed in or on the second lateral surface. Preferably, the connecting element has a first distance to the rotation axis and the further connecting element has a second distance to the rotation axis, the first and second distance preferably being equal in value.

According to a preferred embodiment of the invention, the terminal box comprises a back surface that is formed perpendicularly to the rotation axis and parallel to the front surface, the back surface facing towards the motor housing, wherein the back surface comprises a locking element for positioning and/or fixating the counterpart. It is thereby advantageously possible to secure the counterpart against unwanted motion and unplugging. In other words, a locking element can increase the mechanical stability of the connection between the connecting element and the counterpart of the connecting element. The counterpart can comprise a shape that geometrically corresponds to a shape of the locking element. For instance, the counterpart can comprise a connecting portion that mechanically interacts with the locking element. For instance, the locking element can be configured as a snap-in element, thereby enabling the counterpart to snap in the locking element. Alternatively or additionally, the locking element and/or the connecting portion of the counterpart can be configured flexibly or elastically. Particularly, the connecting portion can be configured pivotably, foldably, collapsibly, movably or the like in order to establish a connection with the locking element. It is also conceivable that the locking element comprises a locking groove or locking recess in order to match a shape of the connecting portion of the counterpart. Moreover, the locking element can be configured as a latch, wherein a translationally movable bolt can interact with the counterpart, thereby securing the counterpart in its position. Furthermore, the locking element can be configured as a multi-piece element. For instance, the locking can comprise an elongated first element made of rubber or another polymer that can be wound around the counterpart, thereby fixating the counterpart, and a stiff second element the first element can be connected to.

According to an advantageous embodiment of the present invention, at least a portion of the locking element protrudes towards the motor housing. Preferably, the locking element can be formed as a wedge. The counterpart, when being moved along the connecting direction in order to establish an electrical connection for the terminal box or pump, can be fixated in a connected position by means of a mechanical interaction between the connecting portion of the counterpart and the locking element. For this purpose, the connecting portion can be formed as a U-shape comprising two parallel sub-portions and a bottom sub-portion that connects the two parallel sub-portions. The connecting portion of the counterpart can be translationally or linearly moved or pushed over a slope of the locking element that is formed as a wedge, the bottom sub-portion facing the direction of motion of the counterpart and the two parallel sub-portions moving along and/or parallel to the connecting direction. Once the bottom sub-portion reaches the top of the slope it can snap behind the locking element, thereby preventing the counterpart from an unwanted unplugging. For this purpose, at least the connecting portion of the counterpart can be configured flexibly. It is generally conceivable that the locking element is configured also in or on the front surface. However, a protrusion on the front surface can increase a maximum length of the circulation pump. Therefore, a locking element according to the invention advantageously enables securing the counterpart without increasing the outer or overall or external dimension of the pump, at least along a direction parallel to the rotation axis.

In a preferred embodiment of the present invention, the connecting element is or corresponds to a plug and the counterpart of the connecting element is or corresponds to a socket or vice versa, and/or the further connecting element is or corresponds to a plug and the further counterpart of the further connecting element is or corresponds to a socket or vice versa. A plug or a socket, or at least a part of a plug or a socket, can be advantageously molded or cast onto the terminal box or a surface of the terminal box. It is particularly advantageous if the plug or plugs or the socket or sockets are formed as one-piece elements with at least one part of the terminal box, for instance as a plastic injection-molded part and further have preferably molded-in contacts that end inside the terminal box, preferably in or on a circuit board in the terminal box. Molding or casting can ensure a tight contact feed-through from the inside of the terminal box to the outside of it, thereby creating a stable plug or socket or sleeve or the like and at the same time fixing the circuit board arranged inside the terminal box in which electrical contacts end.

According to a particularly preferred embodiment of the invention, the circulation pump comprises a means for guiding a cable of the counterpart and/or of the further counterpart, the means for guiding being preferably formed as a groove. Preferably, the circulation pump can comprise two or more means for guiding a cable of the counterpart and/or of the further counterpart. Preferably, the one or more means for guiding a cable are configured in or on the terminal box, particularly on a lateral surface of the terminal box, wherein the lateral surface can be flat or curved or a combination thereof. The means for guiding a cable can be advantageously formed as a groove, wherein the groove can be formed linearly or comprise a curvature or a combination thereof for an optimal guiding of a cable. It is thereby advantageously possible to keep the overall space taken up by the circulation pump small. Preferably, at least a respective portion of the one or the many grooves can be formed perpendicularly to the rotation axis. Furthermore, the grooves can be parallel to the inflow and outflow direction of the pumped medium. Preferably, a first groove is formed in or on a first lateral surface of the terminal box and a second groove is formed in or on a second lateral surface of the terminal box, the first groove and the second groove being formed parallel to each other and spaced apart along a direction of the rotation axis.

According to an advantageous embodiment of the invention, the circulation pump comprises an element for fixation of a cable of the counterpart and/or of the further counterpart, wherein, preferably, the means for guiding a cable comprises the element for fixation. The element for fixation can be a - particularly plastic - latching, folding or snapping element. Alternatively, the element for fixation is a cross sectional narrowing or constriction. It is advantageously possible that the one or many grooves respectively comprise a cross sectional narrowing or constriction of the means for guiding, the cross sectional narrowing or constriction preferably having a slightly smaller dimension, e.g. parallel to the rotation axis, than a diameter of a cable that can be pushed into the groove. It is thereby advantageously possible to secure the cable and reduce the risk of an unwanted unplugging of the cable.

### BRIEF DESCRIPTION OF THE DRAWING

Figure 1a schematically and exemplarily illustrates, in a first perspective view, a first embodiment of an inventive circulation pump with a connecting element and a further connecting element, wherein a counterpart of the connecting element and a further counterpart of the further connecting element are unplugged or respectively disconnected from the connecting element and the further connecting element.
Figure 1b schematically illustrates the first embodiment of the circulation pump shown in Figure 1a in a second perspective view.
Figure 2a schematically and exemplarily illustrates, in the first perspective view, the first embodiment of an inventive circulation pump with the connecting element and the further connecting element, wherein the counterpart of the connecting element and the further counterpart of the further connecting element are plugged in or respectively connected to the connecting element and the further connecting element.
Figure 2b schematically illustrates the first embodiment of the circulation pump shown in the Figure 2a in the second perspective view.
Figure 3a schematically and exemplarily illustrates, in a top view, a second embodiment of the inventive circulation pump with two means for guiding a cable, both means being formed in a terminal box of the pump.
Figure 3b schematically illustrates, in a third perspective view, the second embodiment of the inventive circulation pump.
Figure 3c schematically illustrates, in a fourth perspective view, the second embodiment of the inventive circulation pump with the counterpart being connected to the connecting element and the further counterpart being connected to the further connecting element.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

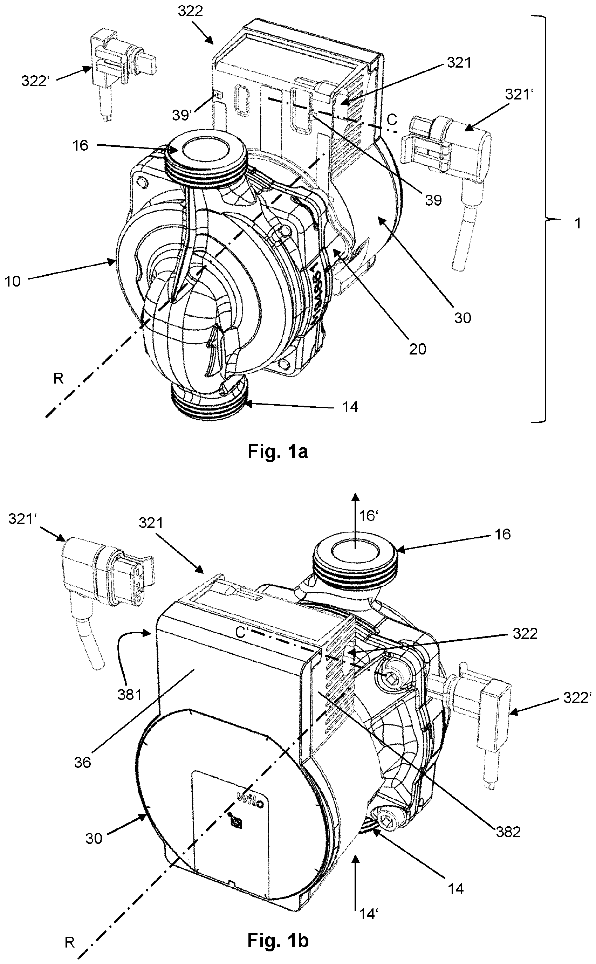

In Figure 1a, a perspective view of a first embodiment of an inventive circulation pump 1 with a connecting element 321 and a further connecting element 322 is schematically shown, wherein a counterpart 321' of the connecting element 321 and a further counterpart 322' of the further connecting element 322 are unplugged or respectively disconnected from the connecting element 321 and the further connecting element 322.

The circulation pump 1 comprises a pump housing 10 with an impeller therein, the impeller being rotatable around a rotation axis R of the circulation pump 1. The impeller is not visible in figure 1a, nor in other figures. The circulation pump 1 further comprises a motor housing 20 with an electrical motor therein, the electrical motor being coaxially connected to and driving the impeller. The electrical motor is not visible in figure 1a either, not in other figures. Furthermore, the circulation pump 1 comprises a terminal box 30 with electrical and/or electronical components therein for controlling the electrical motor. Moreover, the circulation pump 1 comprises the connecting element 321 to establish an electrical connection of the terminal box 30 as well as the further connecting element 322 for establishing a connection for signal transmission and/or exchange. The electrical motor, or in other words the motor housing 20, is arranged between the pump housing 10 and the terminal box 30.

According to the present invention, the connecting element 321 is formed such as to define a connecting direction or axis C perpendicular to the rotation axis R. Furthermore, the connecting element 321 is formed such that, in order to establish the electrical connection, the counterpart 321' of the connecting element 321 is required to be moved along the connecting direction or axis C.

Figure 1b schematically illustrates the first embodiment of the circulation pump 1 shown in figure 1a in a second perspective view. The circulation pump 1 comprises an inflow pipe 14 that can be seen in figure 1a and figure 1b on a bottom half of the respective figure. The circulation pump 1 further comprises an outflow pipe 16 that can be seen in figure 1a and figure 1b on a top half of the respective figure. The inflow pipe 14 defines an inflow direction 14' and the outflow pipe 16 defines an outflow direction 16' of a pumped medium. The inflow pipe 14 and the outflow pipe 16 both comprise an internal cross section that is circular. The inflow direction 14' and the outflow direction 16' are formed at least partially perpendicularly to the rotation axis R. The connecting element 321 of the terminal box 30 is especially formed near the outflow pipe 16 of the pump 1. In other words, with respect to the figures 1a and 1b, the connecting element 321 is illustrated on the top half of the respective figures.

The terminal box 30 comprises a front surface 36 (figure 1b) that is formed perpendicularly to the rotation axis R, the front surface 36 facing away from the motor housing 20. The terminal box 30 further comprises a first lateral surface 381 that is formed perpendicularly to the front surface 36. The terminal box 30 further comprises a second lateral surface 382 that is arranged parallel to the first lateral surface 381. The connecting element 321 is formed in or on the first lateral surface 381. Similarly, the further connecting element 322 is formed in or on the second lateral surface 382.

The connecting element 321 is larger than the further connecting element 322. Analogously, the counterpart 321' is larger than the further counterpart 322'. While the counterpart 321' of the connecting element 321 can be moved along the connecting direction or axis C in order to establish an electrical connection, likewise, the further counterpart 322' of the further connecting element 322 can be moved along a further connecting direction or axis C'.

The connecting direction or axis C and the further connecting direction or axis C' are arranged parallel to each other. Furthermore, the connecting direction or axis C has a first distance to the rotation axis R, while the further connecting direction or axis C' has a second distance to the rotation axis R, the first distance being unequal to the second distance. Both, the connecting direction or axis C and the further connecting direction or axis C' do not comprise an intersection point with the rotation axis R. In other words, the connecting direction or axis C and the rotation axis R are skew. Likewise, the further connecting direction or axis C' and the rotation axis R are also skew. However, it is also conceivable that the connecting direction or axis C and the further connecting direction or axis C' are arranged coaxially.

The figures represent an embodiment or embodiments where the connecting element 321 and the further connecting element 322 are located on different (or opposing) sides of the terminal box; however, according to the present invention, it is also conceivable to arrange the connecting element 321 and the further connecting element 322 on the same sides of the terminal box.

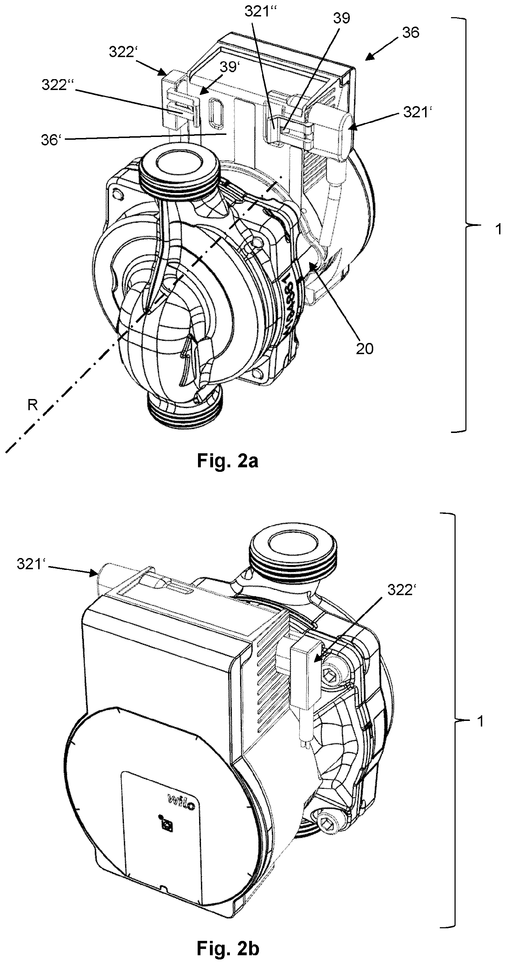

Figure 2a schematically and exemplarily illustrates, in the first perspective view, the first embodiment of an inventive circulation pump 1 with the connecting element 321 and the further connecting element 322, wherein the counterpart 321' of the connecting element 321 and the further counterpart 322' of the further connecting element 322 are plugged in or respectively connected to the connecting element 321 and the further connecting element 322. The terminal box 30 comprises a back surface 36' that is formed perpendicularly to the rotation axis R and parallel to the front surface 36, the back surface 36' facing towards the motor housing 20, wherein the back surface 36' comprises a locking element 39 for positioning and/or fixating the counterpart 321'. The back surface 36' also comprises a further locking element 39' that is more visible in figure 1a. The locking element 39 and the further locking element 39' are formed as wedges.

The counterpart 321' comprises a connecting portion 321" and the further counterpart 322' comprises a further connecting portion 322". Both connecting portions 321", 322" ensure that an unwanted unplugging or disconnection occurs while the circulation pump 1 is in operation. For this purpose, the connecting portions 321", 322" interact mechanically with their corresponding locking element 39, 39'. The locking element 39 and the further locking element 39' both protrude towards the motor housing 20.

Figure 2b schematically illustrates the first embodiment of the circulation pump 1 shown in the Figure 2a in the second perspective view.

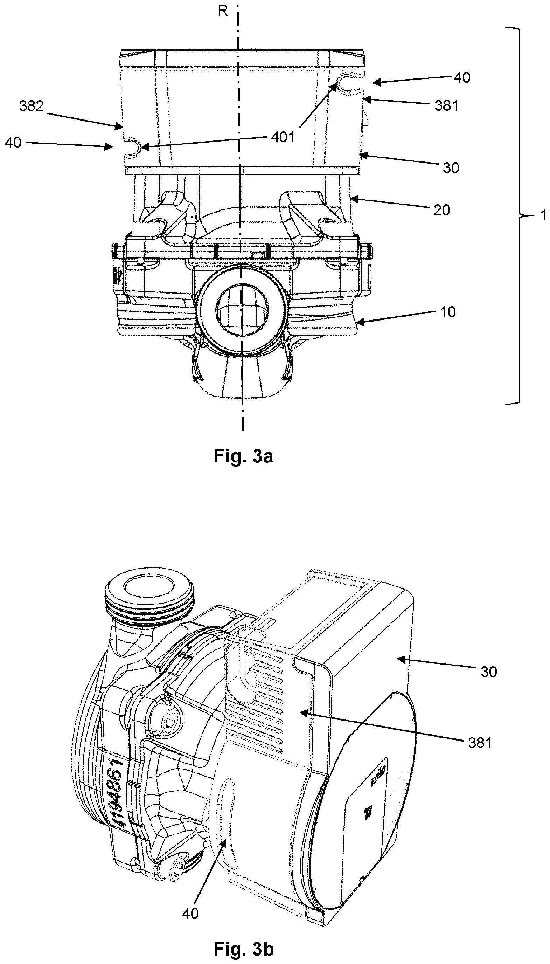

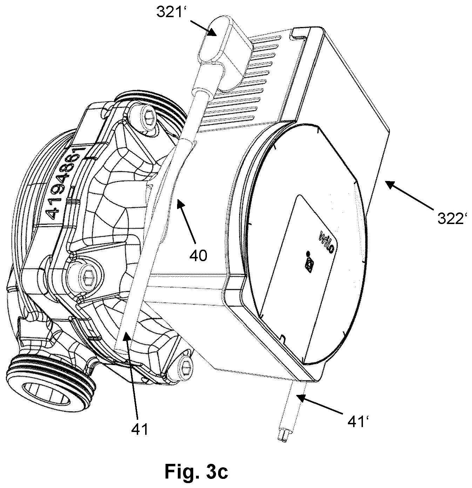

Figure 3a schematically and exemplarily illustrates, in a top view, a second embodiment of the inventive circulation pump 1 with two means 40 for guiding a cable 41, both means 40 being formed in the terminal box 30 of the pump 1. Both means 40 according to the embodiment in figure 3a are formed as a groove 40. Furthermore, the means 40 comprises an element for fixation that is formed as a cross sectional narrowing of the groove 40. In other words, the groove 40 has a slightly smaller dimension parallel to the rotation axis R than a diameter of a cable 41 (figure 3c) that can be pushed into the groove 40. It is thereby advantageously possible to secure the cable 41 and reduce the risk of an unwanted unplugging of the cable 41.

The two means or grooves 40 according to the second embodiment are spaced apart along the rotation axis R. Furthermore, the grooves 40 have different depths, the depths being defined respectively as a dimension or length perpendicular to the rotation axis R and respectively extending from a deepest point 401 of the respective groove 40 up to a point that is respectively arranged in an external extension of the first lateral surface 381 or the second lateral surface 382.

Figure 3b schematically illustrates, in a third perspective view, the second embodiment of the inventive circulation pump 1. The grooves 40, only one of which is visible in figure 3b, are configured in the terminal box 30.

Figure 3c schematically illustrates, in a fourth perspective view, the second embodiment of the inventive circulation pump 1 with the counterpart 321' being connected to the connecting element 321 and the further counterpart 322' being connected to the further connecting element 322. As can be taken from figure 3c, the cable 41 of the counterpart 321' is guided by the groove 40. Likewise, the cable 41' of the further counterpart 322' is guided by another groove 40 that is not visible in figure 3c.

### Reference signs

- 1: Circulation pump

- 10: Pump housing
- 14: Inflow pipe
- 14': Inflow direction
- 16: Outflow pipe
- 16': Outflow direction
- 20: Motor housing
- 30: Terminal box
- 36: Front surface
- 36': Back surface
- 39: Locking element
- 39': Further locking element
- 40: Means for guiding a cable, groove
- 41: Cable
- 41': Further cable

- 321: Connecting element
- 321': Counterpart
- 321": Connecting portion
- 322: Further connecting element
- 322': Further counterpart
- 322": Further connecting portion
- 381: First lateral surface
- 382: Second lateral surface
- 401: Deepest point of a groove

- C: Connecting direction or axis
- C': Further connecting direction or axis
- R: Rotation axis

## Claims

1. Circulation pump (1) comprising
-- a pump housing (10) with an impeller therein, the impeller being rotatable around a rotation axis (R) of the pump (1),
-- a motor housing (20) with an electrical motor therein, the electrical motor being coaxially connected to and driving the impeller,
-- a terminal box (30)
with electrical and/or electronical components therein for controlling the electrical motor, and
with a connecting element (321) to establish an electrical connection of the terminal box (30),
the electrical motor being arranged between the pump housing (10) and the terminal box (30),
**characterized in that** the connecting element (321) is formed such as to define a connecting direction or axis (C) perpendicular to the rotation axis (R) and such that, in order to establish the electrical connection, a counterpart (321') of the connecting element (321) is required to be moved along the connecting direction or axis (C).

2. Circulation pump (1) according to claim 1, **characterized in that** the connecting direction or axis (C) and the rotation axis (R) are skew and/or do not comprise an intersection point.

3. Circulation pump (1) according to claim 1 or 2, **characterized by** comprising an inflow pipe (14) and an outflow pipe (16),
wherein the inflow pipe (14) defines an inflow direction (14'),
wherein the outflow pipe (16) defines an outflow direction (16'),
wherein the inflow direction (14') and the outflow direction (16') are formed at least partially perpendicularly to the rotation axis (R), wherein the connecting element (321) of the terminal box (30) is especially formed near the outflow pipe (16) of the pump (1).

4. Circulation pump (1) according to any of the preceding claims, **characterized in that** the terminal box (30) comprises a front surface (36) that is formed perpendicularly to the rotation axis (R), the front surface (36) facing away from the motor housing (20), wherein the terminal box (30) further comprises a first lateral surface (381) that is formed perpendicularly to the front surface (36), wherein the connecting element (321) is formed in or on the first lateral surface (381).

5. Circulation pump (1) according claim 4, **characterized by** a further connecting element (322) that is formed such as to define a further connecting direction or axis (C') perpendicular to the rotation axis (R) and such that, in order to establish a further electrical connection, a further counterpart (322') is required to be moved along the further connecting direction or axis (C'), wherein the further connecting direction or axis (C') is preferably arranged coaxially with the connecting direction or axis (C).

6. Circulation pump (1) according to any of the preceding claims, **characterized in that** the terminal box (30) comprises a back surface (36') that is formed perpendicularly to the rotation axis (R) and parallel to the front surface (36), the back surface (36') facing towards the motor housing (20), wherein the back surface (36') comprises a locking element (39) for positioning and/or fixating the counterpart (321').

7. Circulation pump (1) according to claim 6, **characterized in that** at least a portion of the locking element (39) protrudes towards the motor housing (20).

8. Circulation pump (1) according to any of the preceding claims, **characterized in that** the connecting element (321) is or corresponds to a plug and the counterpart (321') of the connecting element (321) is or corresponds to a socket or vice versa, and/or the further connecting element (322) is or corresponds to a plug and the further counterpart (322') of the further connecting element (322) is or corresponds to a socket or vice versa.

9. Circulation pump (1) according to any of the preceding claims, **characterized by** a means (40) for guiding a cable of the counterpart (321') and/or of the further counterpart (322'), the means (40) for guiding being preferably formed as a groove.

10. Circulation pump (1) according to any of the preceding claims, **characterized by** an element for fixation of a cable of the counterpart (321') and/or of the further counterpart (322'), wherein, preferably, the means for guiding a cable comprises the element for fixation.

## Amended claims

### Amended claims in accordance with Rule 137(2) EPC.

1. Circulation pump (1) comprising
-- a pump housing (10) with an impeller therein, the impeller being rotatable around a rotation axis (R) of the pump (1),
-- a motor housing (20) with an electrical motor therein, the electrical motor being coaxially connected to and driving the impeller,
-- a terminal box (30)
with electrical and/or electronical components therein for controlling the electrical motor, and
with a connecting element (321) to establish an electrical connection of the terminal box (30),
the electrical motor being arranged between the pump housing (10) and the terminal box (30),
**characterized in that** the connecting element (321) is formed such as to define a connecting direction or axis (C) perpendicular to the rotation axis (R) and such that, in order to establish the electrical connection, a counterpart (321') of the connecting element (321) is required to be moved along the connecting direction or axis (C), wherein the terminal box (30) comprises a front surface (36) that is formed perpendicularly to the rotation axis (R), the front surface (36) facing away from the motor housing (20), wherein the terminal box (30) further comprises a first lateral surface (381) that is formed perpendicularly to the front surface (36), wherein the connecting element (321) is formed in or on the first lateral surface (381),
wherein a further connecting element (322) is formed such as to define a further connecting direction or axis (C') perpendicular to the rotation axis (R) and such that, in order to establish a further electrical connection, a further counterpart (322') is required to be moved along the further connecting direction or axis (C'), wherein the further connecting direction or axis (C') is arranged coaxially with the connecting direction or axis (C).

2. Circulation pump (1) according to claim 1, **characterized in that** the connecting direction or axis (C) and the rotation axis (R) are skew and/or do not comprise an intersection point.

3. Circulation pump (1) according to claim 1 or 2, **characterized by** comprising an inflow pipe (14) and an outflow pipe (16),
wherein the inflow pipe (14) defines an inflow direction (14'),
wherein the outflow pipe (16) defines an outflow direction (16'),
wherein the inflow direction (14') and the outflow direction (16') are formed at least partially perpendicularly to the rotation axis (R), wherein the connecting element (321) of the terminal box (30) is especially formed near the outflow pipe (16) of the pump (1).

4. Circulation pump (1) according to any of the preceding claims, **characterized in that** the terminal box (30) comprises a back surface (36') that is formed perpendicularly to the rotation axis (R) and parallel to the front surface (36), the back surface (36') facing towards the motor housing (20), wherein the back surface (36') comprises a locking element (39) for positioning and/or fixating the counterpart (321').

5. Circulation pump (1) according to claim 4, **characterized in that** at least a portion of the locking element (39) protrudes towards the motor housing (20).

6. Circulation pump (1) according to any of the preceding claims, **characterized in that** the connecting element (321) is or corresponds to a plug and the counterpart (321') of the connecting element (321) is or corresponds to a socket or vice versa, and/or the further connecting element (322) is or corresponds to a plug and the further counterpart (322') of the further connecting element (322) is or corresponds to a socket or vice versa.

7. Circulation pump (1) according to any of the preceding claims, **characterized by** a means (40) for guiding a cable of the counterpart (321') and/or of the further counterpart (322'), the means (40) for guiding being preferably formed as a groove.

8. Circulation pump (1) according to any of the preceding claims, **characterized by** an element for fixation of a cable of the counterpart (321') and/or of the further counterpart (322'), wherein, preferably, the means for guiding a cable comprises the element for fixation.
